# EUROPEAN PATENT APPLICATION

(11) **EP 1 650 973 A1**
(43) Date of publication of application: **26.04.2006**
(21) Application number: 04292528.9
(22) Date of filing: 25.10.2004
(51) Int. Cl.: H04N 7/24

(54) **Method for encoding a multimedia content**

(71) Applicant: Alcatel USA Sourcing, L.P., Plano, Texas 75075 (US)
(72) Inventor: Vermeiren, Tim, 9240 Zele (BE); Borghs, Eric Frans Elisa, 2440 Geel (BE); Badt, Sig Harold, Richardson, Texas 75081 (US)
(74) Representative: Narmon, Gisèle Marie Thérèse

(57) **Abstract**

The present invention relates to a method for encoding a multimedia content, and comprising the steps of:
- encoding the multimedia content into hierarchical elementary streams,
- parsing the elementary streams into data packets for further transmission through a network towards a decoding unit,
- receiving a request whereby the decoding unit requests delivery of at least one required elementary stream.

A method according to the invention further comprises the steps of:
- discriminating within the data packets between first data packets that compose the at least one required elementary stream, and second data packets that do not,
- assigning one first network priority to the first data packets, and assigning at least one second network priority, lower than the first network priority, to the second data packets,
- transmitting the first data packets and the second data packets towards the decoding unit.

The present invention also relates to an encoding unit implementing a method according to the invention.

## Description

The present invention relates to a method for encoding a multimedia content, and comprising the steps of:
- encoding said multimedia content into hierarchical elementary streams comprising a base layer stream and at least one enhancement layer stream,
- parsing said hierarchical elementary streams into data packets for further transmission through a network towards a decoding unit,
- receiving a request whereby said decoding unit requests delivery of at least one required elementary stream, said at least one required elementary stream forming a subset that is hierarchically-continuous and that comprises said base layer stream.

Such a method is already known from the art, e.g. from the document entitled '*MPEG4 Systems: Elementary Stream Managemen*t' published in January 2000 by Elsevier in the journal '*Signal Processing: Image Communication*'*,* vol. 14, no. 4-5, p. 299-320.

Scalable (or hierarchical) encoding allows a multimedia content (audio and/or visual objects) to be parsed into a number of elementary streams of different bit rate such that a subset of the total bit stream can still be decoded into a meaningful signal. The reconstructed quality, in general, is related to the number of elementary streams (or layers) used for decoding and reconstruction.

For example, a visual stream may be parsed into a base layer, and further enhancement layers providing improvements in the temporal domain (temporal scalability) and/or in the spatial domain (spatial scalability).

The bit stream parsing can occur either during transmission or in the decoding unit. Typically, the decoding unit requests delivery of a subset of all the available elementary streams, based on e.g. available decoding resources and/or available network resources and/or a Service Level Agreement (SLA).

In a further step of the known method, each elementary stream is parsed into data packets for further transmission through a network towards the decoding unit.

Data packets are for example Internet Protocol (IP) datagrams, or Ethernet frames, or Asynchronous Transfer Mode (ATM) cells, or Multi-Protocol Label Switching (MPLS) packets.

An elementary stream may further require a particular Quality of Service (QoS) while transported over the network. That particular QoS translates into a network priority (or scheduling priority), which network units use to schedule and forward data packets throughout the network. The quality the user will experience is not only a factor of the network load and of the available decoding resources, but will closely depend on the assigned network priorities.

The disclosed method is disadvantageous in that multiple network priorities, and by the way multiple scheduling and networking resources, are necessary for accommodating each and every QoS requirements.

It is an object of the present invention to simplify network implementation and to improve user experience.

According to the invention, this object is achieved due to the fact that said method further comprises the steps of:
- discriminating within said data packets between first data packets that compose said at least one required elementary stream, and second data packets that do not,
- assigning one first network priority to said first data packets, and assigning at least one second network priority, lower than said one first network priority, to said second data packets,
- transmitting said first data packets and said second data packets through said network towards said decoding unit.

Data packets that compose the required (or requested, or agreed, or mandatory) elementary streams, referred to as first data packets, receive the same and highest network priority, while data packets that compose further (or optional) enhancement layer streams, referred to as second data packets, are assigned lower network priorities, thereby reducing the number of network priorities the network shall implement.

Furthermore, by transmitting further enhancement layers, yet with a lower priority, the decoding unit is left with the ability to improve the user experience (e.g., by improving spatial resolution) provided the network load and/or the decoding resources and/or the SLA allow for it.

The network priorities are no longer statically assigned (e.g., the higher the quality, the lower the assigned network priority), but rather are dynamically adapted based on what is exactly required. The user is then likely being delivered the basic quality he asked for.

Various QoS requirements map to a simple, yet efficient, network priority assignment scheme, making this solution particularly attractive.

The present invention is applicable to whatever type of networking technology that parses data streams into data packets (or data frames) that are individually routed or forwarded, and that supports precedence while scheduling traffic based on priority information embedded within, or appended to, or sent along with, the data packets.

An embodiment of a method according to the invention is characterized in that said method further comprises the steps of:
- discriminating within said second data packets between third data packets that compose an elementary stream that is hierarchically-contiguous to a required elementary stream, and fourth data packets that do not,
- assigning one third network priority, lower that said one first network priority, to said third data packets, and assigning at least one fourth network priority, lower than said one third network priority, to said fourth data packets.

By doing so, a further discrimination is carried out between enhancement streams that are hierarchically-contiguous to the subset of required elementary streams, and further enhancement streams. The former are given precedence over the latter, thereby giving them a higher probability to reach their destination if the network conditions worsen.

This embodiment is based upon an insight that the highest quality scales are useless if the decoding unit only asks for e.g. low or medium quality display, and that emphasis should be put on quality scales that are immediately contiguous to what was asked for, and which may improve the user experience up to a reasonable extent.

Another embodiment of a method according to the invention is characterized in that the step of assigning said one first network priority to said first data packets comprises the step of marking said first data packets with one first network priority code, and in that the step of assigning said at least one second network priority to said second data packets comprises the step of marking said second data packets with at least one second network priority code.

In this embodiment, a particular network priority translates into a particular network priority code, with which data packets are marked (or tagged). An example of a network priority code is the Differentiated Service Code Point (DSCP) in IP datagrams, or user priority information in 802.1Q VLAN tag for Ethernet frames.

A further embodiment of a method according to the invention is characterized in that the step of assigning said one first network priority to said first data packets comprises the step of assigning one first virtual connection, which is established over said network and implements said one first network priority, to said first data packets,
in that the step of transmitting said first data packets towards said decoding unit comprises the step of transmitting said first data packets through said one first virtual connection towards said decoding unit,
in that the step of assigning said at least one second network priority to said second data packets comprises the step of assigning at least one second virtual connection, which is established over said network and implements respective ones of said at least one second network priority, to said second data packets, and in that the step of transmitting said second data packets towards said decoding unit comprises the step of transmitting said second data packets through said at least one second virtual connection towards said decoding unit.

In this embodiment, a particular network priority translates into a particular virtual connection that implements a particular QoS, and through which data packets are transmitted. lncremental-quality policy can then be supported with a few virtual connections only, thereby simplifying even further network engineering.

An example of a virtual connection is an ATM Virtual Circuit (VC) or Virtual Path (VP), or a MPLS Label Switched Path (LSP). Such virtual connections may be established over all or part of the network. For instance, a group of user-dedicated ATM VCs may be aggregated over one single ATM VP.

The present invention also relates to an encoding unit adapted to encode multimedia content, and comprising:
- an encoding means adapted to encode said multimedia content into hierarchical elementary streams comprising a base layer stream and at least one enhancement layer stream,
- a stream processing means coupled to said encoding means, and adapted to parse said hierarchical elementary streams into data packets for further transmission through a network towards a decoding unit,
- a negotiating means adapted to receive a request whereby said decoding unit requests transmission of at least one required elementary stream, said at least one required elementary stream forming a subset that is hierarchically-continuous and that comprises said base layer stream.

An encoding unit according to the invention is characterized in that said stream processing means is further coupled to said negotiating means, and is further adapted:
- to discriminate within said data packets between first data packets that compose said at least one required elementary stream, and second data packets that do not,
- to assign one first network priority to said first data packets, and to assign at least one second network priority, lower than said one first network priority, to said second data packets,
- to transmit said first data packets and said second data packets through said network towards said decoding unit.

Embodiments of an encoding unit according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a data communication system comprising an encoding unit according to the invention,
- fig. 2 represents a method according to the invention,
- fig. 3 represents inter-relationship examples between elementary streams.

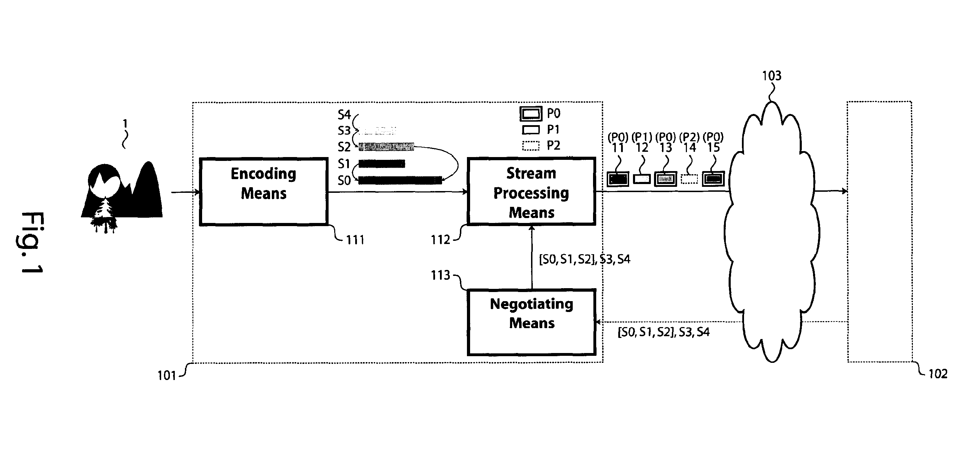

There is seen in fig. 1 a data communication system comprising:
- an encoding unit 101,
- a decoding unit 102,
- a data communication network 103.

The encoding unit 101 and the decoding unit 102 are both coupled to the network 103.

In a preferred embodiment of the present invention, the network 103 is IP-based and comprises network units (not shown), such as IP routers, bridges, repeaters, etc, that provide data exchange/forwarding services to the encoding unit 101 and to the decoding unit 102. The network units further support differentiated forwarding based on DSCP.

The encoding unit 101 comprises the following functional blocks:
- an encoding means 111,
- a stream processing means 112.
- a negotiating means 113.

The encoding means 111 is coupled to the stream processing means 112. The stream processing means 112 is further coupled to the negotiating means 113. Both the stream processing means 112 and the negotiating means 113 are coupled to the network 103, e.g. via a communication port (not shown). In a preferred embodiment of the present invention, the encoding unit 101 makes use of MPEG4 to encode an analog or digital audio/video signal, which represents a particular audio/visual content 1, into a data stream. However, the present invention is not tied to that particular codec, but is applicable to any kind of scalable codec.

The signal is fed to the encoding means 111. The encoding means 111 is adapted to generate elementary streams by encoding audio/visual objects that compose the content 1. The encoding means 111 further generates a scene description stream that expresses how individual audio/visual objects are to be composed together for presentation on the user's screen and speakers, and an object descriptor stream that supplies information about elementary streams, such as format and location of the data, timing information, decoding profile, inter-relationships for scalable encoding, etc. These 2 control streams are not shown in fig. 1.

For example, the encoding means 111 generates 5 elementary streams S0 to S4 that jointly contain the compressed representation of the content 1.

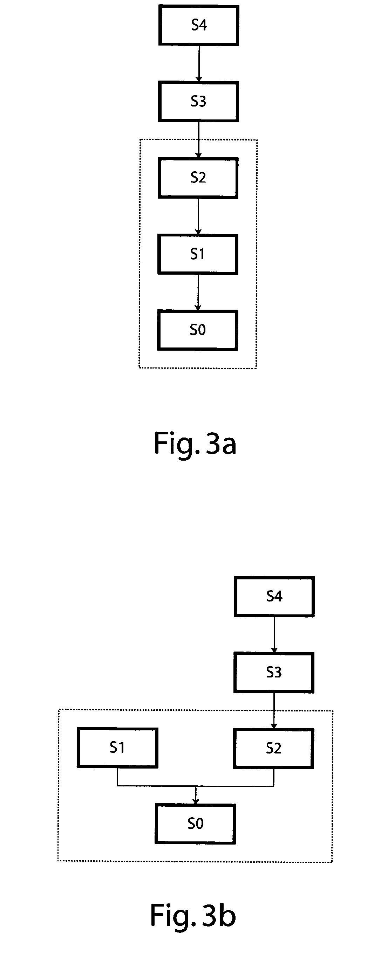

Fig. 3a and 3b depict two possible inter-relationships between the elementary streams S0 to S4. In fig. 3a, the elementary streams S0 to S4 are in direct inter-relationship, with S0 being the base layer. This may correspond for instance to successive spatial resolution improvements. In fig. 3b, the base layer S0 is referenced by both S1 and S2, providing for example quality improvement both in the temporal domain and in the spatial domain. S3 and S4 may then correspond to further spatial or temporal enhancements.

The present invention is not tied to the number of elementary streams that is used for encoding the content 1, nor is tied to those 2 particular inter-dependency schemes.

The elementary streams S0 to S4 are packaged into access units (a frame of video or audio data), and made available to the stream processing means 112.

The stream processing means 112 is adapted to parse the elementary streams S0 to S4 into data packets for delivery over the network 1.

It is assumed that MPEG4 payload is encapsulated over Real-Time Protocol (RTP), next over User Data Protocol (UDP), next over IP, and finally over a medium access layer for further transmission on a physical medium.

For illustrative purpose, there is seen in fig. 1 5 data packets 11 to 15 at the output of the stream processing means 112 related to the elementary streams S0, S3, S2, S4 and S1 respectively. The data packets 11 to 15 are transmitted through the network 103 towards the decoding unit 102.

The stream processing means 112 is further adapted to set the DSCP field in the IP header of the data packet.

The stream processing means 112 determines to which particular elementary stream a particular data packet relates, either by looking at the RTP payload, or by means of out-of-band information directly supplied by the encoding means 111.

Next, the stream processing means 112 determines whether that elementary stream forms part of the subset of required elementary streams, and if not whether that elementary stream is hierarchically-contiguous to that subset.

The stream processing means 112 sets the DSCP field of that packet accordingly, and transmit it over the network 103.

The negotiating means 113 is adapted to determine whether a particular elementary stream shall be, or may be, transmitted towards the decoding unit 102.

More particularly, the negotiation means 113 is adapted to receive a first indication whereby the decoding unit 102 requests transmission of a subset of the elementary streams S0 to S4, and a second indication whereby the decoding unit 102 notifies the encoding unit 101 that further enhancement streams may also be transmitted, that second notification being optional. The elementary streams that shall, or that may, be transmitted are either explicitly identified by the decoding unit 102, e.g. by means of a Universal Resource Locator (URL) or some logical identifier, or are globally (or implicitly) identified, e.g. by means of an initial object descriptor that ultimately points towards all the available streams, together with a decoding-profile.

An operation of that preferred embodiment follows.

The decoding unit 102 sends a request to the encoding unit 101, and further to the negotiating means 113, whereby delivery of the elementary streams S0 to S2 is requested (as denoted in fig. 1 by the square brackets). The elementary streams S3 and S4 constitute further potential enhancement layers that may also be transmitted, and that will be appropriately handled by the decoding unit 102, if so. This information is made available to the stream processing means 112.

It is assumed that the stream processing means 112 uses 3 network priority levels P1, P2 and P3, P1 being given precedence over P2, and P2 being given precedence over P3. It is left to the skilled person how to map these network priorities to particular DSCP codes.

The stream processing means 112 tags data packets that relate to any of the elementary streams S0, S1 or S2 with network priority P0, tags data packets that relate to the elementary stream S3, which is hierarchically-contiguous to the elementary stream S2, with network priority P1, and tags data packets that relate to the elementary stream S4, which is not hierarchically-contiguous to any of the elementary streams S0, S1 and S2, with network priority P2.

Presently, the stream processing means 112 tags data packets 11, 13 and 15 with network priority P0 (depicted as a double solid rectangle in fig. 1), tags data packet 12 with network priority P1 (depicted as a single solid rectangle in fig. 1), and tags data packet 14 with network priority P2 (depicted as a dotted rectangle in fig. 1).

The data packets 11 to 15 are then transmitted through the network 103 towards the decoding unit 102.

The data packets that compose the subset of required elementary streams, being given the highest network priority, reach their destination with a higher probability than with a fixed-assignment rule. The data packets that compose further enhancement streams reach their destination provided there is no higher priority traffic that preempt the network resources. If so, and provided the user's SLA allows for it, those further enhancement streams will improve the user experience.

In an alternative embodiment of the present invention, the content 1 is pre-encoded into a file, such as a MPEG4 file, that is stored in a non-volatile memory, such as a hard disk. The encoding means 111 reduces then to the minimum, that is to say reads data records from the file, and reconstructs therefrom the video frames, which the stream processing means 112 is fed with.

In an alternative embodiment of the present invention, the stream processing means 112 makes use of 2 network priority levels, one for the required elementary streams, an other one for further enhancement streams. These is no need thus to determine whether a particular elementary steam, that does not form part of the subset of required elementary streams, is hierarchically-contiguous to that subset.

Other embodiments with further network priority levels could be though of as well.

In still an alternative embodiment of the present invention, the network is ATM-based.

The stream processing means 112 parses the elementary stream S0 to S4 into ATM cells, and determines, for each ATM cell, a VP identifier (VPI) and/or a VC identifier (VCI) based on the quality scale to which that ATM cell relates.

For example, multiple VCs are provisioned through the network 103 between the encoding unit 101 and the decoding unit 102. The VC that gets the most stringent QoS conveys ATM cells that compose the subset of required elementary streams, while the remaining VCs with less stringent QoS, convey ATM cells that compose further enhancement streams.

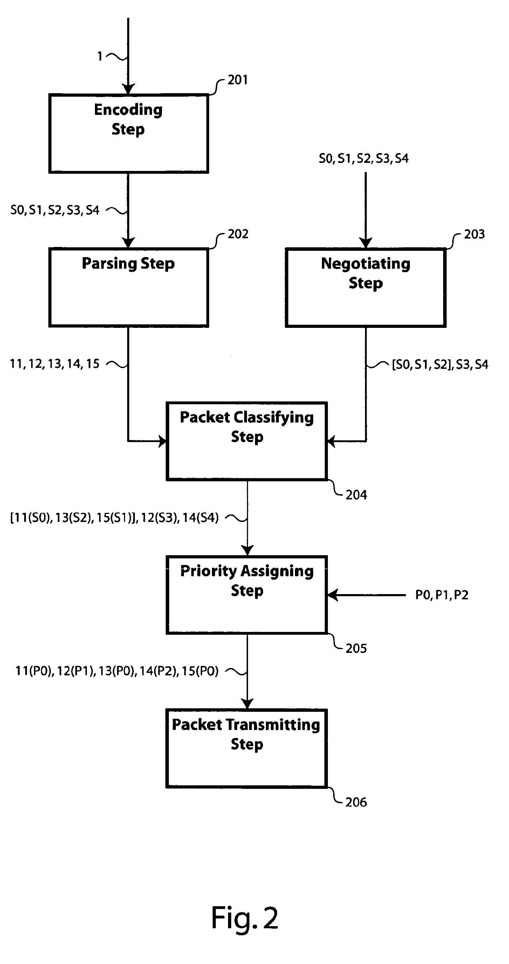

There is seen in fig. 2 a method according to the invention that comprises:
- an encoding step 201, wherein the content 1 is encoded into elementary streams, presently the elementary streams S0 to S4,
- a parsing step 202, wherein the elementary streams are parsed into data packets, presently the data packets 11 to 15,
- a negotiating step 203, wherein a subset out of all the available elementary streams is requested, presently S0 to S2,
- a packet classifying step 204, wherein it is determined whether a data packet relates to that subset or not,
- a priority assigning step 205, wherein network priorities are assigned to data packets, presently the data packets 11, 13 and 15 are assigned network priority P0, the data packet 12 is assigned network priority P1, and the data packet 14 is assigned network priority P2,
- a packet transmitting step 206, wherein data packets are transmitted through a network towards a decoding unit, presently the data packets 11 to 15 are transmitted through the network 103 towards the decoding unit 102.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for encoding a multimedia content (1), and comprising the steps of:
- encoding (201) said multimedia content into hierarchical elementary streams (S0 to S4) comprising a base layer stream (SO) and at least one enhancement layer stream (S1 to S4),
- parsing (202) said hierarchical elementary streams into data packets (11 to 15) for further transmission through a network (103) towards a decoding unit (102),
- receiving (203) a request whereby said decoding unit requests delivery of at least one required elementary stream (S0 to S2), said at least one required elementary stream forming a subset that is hierarchically-continuous and that comprises said base layer stream,
***characterized in that*** said method further comprises the steps of:
- discriminating (204) within said data packets between first data packets (11, 13, 15) that compose said at least one required elementary stream, and second data packets (12, 14) that do not,
- assigning (205) one first network priority (P0) to said first data packets, and assigning at least one second network priority (P1, P2), lower than said one first network priority, to said second data packets,
- transmitting (206) said first data packets and said second data packets through said network towards said decoding unit.

2. A method according to claim 1, ***characterized in that*** said method further comprises the steps of:
- discriminating within said second data packets between third data packets (12) that compose an elementary stream that is hierarchically-contiguous to a required elementary stream, and fourth data packets (14) that do not,
- assigning one third network priority (P1), lower that said one first network priority, to said third data packets, and assigning at least one fourth network priority (P2), lower than said one third network priority, to said fourth data packets.

3. A method according to claim 1, ***characterized in that*** the step of assigning said one first network priority to said first data packets comprises the step of marking said first data packets with one first network priority code, *and **in that*** the step of assigning said at least one second network priority to said second data packets comprises the step of marking said second data packets with at least one second network priority code.

4. A method according to claim 1, ***characterized in that*** the step of assigning said one first network priority to said first data packets comprises the step of assigning one first virtual connection, which is established over said network and implements said one first network priority, to said first data packets,
***in that*** the step of transmitting said first data packets towards said decoding unit comprises the step of transmitting said first data packets through said one first virtual connection towards said decoding unit,
***in that*** the step of assigning said at least one second network priority to said second data packets comprises the step of assigning at least one second virtual connection, which is established over said network and implements respective ones of said at least one second network priority, to said second data packets, *and **in that*** the step of transmitting said second data packets towards said decoding unit comprises the step of transmitting said second data packets through said at least one second virtual connection towards said decoding unit.

5. An encoding unit (101) adapted to encode a multimedia content (1), and comprising:
- an encoding means (111) adapted to encode said multimedia content into hierarchical elementary streams (S0 to S4) comprising a base layer stream (SO) and at least one enhancement layer stream (S1 to S4),
- a stream processing means (112) coupled to said encoding means, and adapted to parse said hierarchical elementary streams into data packets (11 to 15) for further transmission through a network (103) towards a decoding unit (102),
- a negotiating means (113) adapted to receive a request whereby said decoding unit requests delivery of at least one required elementary stream (S0 to S2), said at least one required elementary stream forming a subset that is hierarchically-continuous and that comprises said base layer stream,
***characterized in that*** said stream processing means (113) is further coupled to said negotiating means, and is further adapted:
- to discriminate within said data packets between first data packets (11, 13, 15) that compose said at least one required elementary stream, and second data packets (12, 14) that do not,
- to assign one first network priority (P0) to said first data packets, and to assign at least one second network priority (P1, P2), lower than said one first network priority, to said second data packets,
- to transmit said first data packets and said second data packets through said network towards said decoding unit.
